# EUROPEAN PATENT SPECIFICATION

(11) **EP 2 789 775 B1**
(45) Date of publication and mention of the grant of the patent: **06.07.2016**
(21) Application number: 13460052.7
(22) Date of filing: 02.08.2013
(51) Int. Cl.: E04H 9/14, E04H 17/16, E02B 3/10

(54) **Fencing subassembly with the option of being transformed into a flood barrier**
Zaununteranordnung mit der Option zur Umwandlung in eine Flutsperre
Sous-ensemble d'escrime avec l'option d'être transformé en une barrière anti-inondation

(30) Priority: 10.04.2013 PL 40349013; 31.07.2013 PL 40492513
(43) Date of publication of application: 15.10.2014
(73) Proprietor: LASER-Met Sp. z o.o., 09-400 Plock (PL)
(72) Inventor: Lewicki, Grzegorz Ryszard, 09-410 Plock (PL); Borowski, Marian, 04-730 Warszawa (PL)
(74) Representative: Czerpak, Andrzej

(56) References cited:
- DE-A1-102010 046 504
- DE-U1- 20 302 069
- US-B1- 7 815 397

## Description

The subject of this invention is a modular, double-function subassembly which, placed in the vertical position, serves as a fence, and which features the option of being transformed into a flood barrier, after unfolding it.

Polish patent description Nº PL199 371 features a portable flood barrier with particular sections which can be arranged on the ground, thus forming parts of a barrier securing the area against flood water. The barrier is equipped with a raised partition mounted to the base, on one of its edges, with a hinge. The hinge allows for rotating the partition from the horizontal position to the raised position. Each section is also equipped with a flexible or rigid connector protruding from the base and reaching the partition, preventing from elevating the partition above the raised position.

US patent description Nº US 7,815,397 B1 discloses an expansion-sealed flood control gate, comprising a water board, a frame structure, two symmetrical constraint tracks, at least one encased expandable sealing tube, and a plurality of adapters. A U-shaped slot is formed between the two symmetrical constraint tracks for plugging in the water board. Each constraint track has a U-shaped expanding compression chamber connecting from one end to the other end to accommodate the tube inside. The adapters are connected with the open ends of the tube and fixed on the constraint tracks at the connected ends.

German patent application Nº DE 10 2010 046504 A1 describes a flood barrier wall comprising at least one wall element, which at the bottom is placed in the trough of a U-shaped fixed stationary ground. The wall element comprise a flexible sealing material fixed atop the grid, which is made of steel or plastic or synthetic fabric.

The essence of this invention is that it comprise frame modules, load-bearing elements and spans, wherein the frame modules comprise a straight frame module and a corner frame module. The load-bearing elements comprise load-bearing piles mounted on a foundation settled in the ground. A span is mounted between the load-bearing piles by means of a support and a rod. The frame modules are interconnected with a bolt. The fence subassembly further comprises pins which are mounted atop the frame modules and support, in use, a flexible sealing material tightly mounted onto a dedicated sealing fixture founded in the ground.

In another variant of the invention, the load-bearing piles of the straight, frame module unfolded inwards the fence are permanently fixed to the span, forming an integral part. The load-bearing piles are divided in the upper and lower part, both mounted on rotary hinges on the pivot. After folding to the vertical position, they are temporarily connected to one another with a bar equipped with a hole located on the free end of the pile mounted on the upper part. The bar is shut off in special sleeves, mounted on the lower part of the pile, with a staple located in co-axis holes of the bar and the sleeve. The flexible material applied here is fully waterproof, and thus may be mounted on the frame modules from the flood side. All frame modules are equipped with sleeves cooperating with corresponding bolts. The lower part of the flexible material is mounted in the base, at ground level, using a flexible roller locked in a special fixture.

The corner frame module is, in general, divided according to its diagonal, whereas its hinged span is mounted in a fixed span using suitable hinges. After unfolding to the flood position, the hinged span rests on supports locked in support sockets. After unfolding to the flood position, the corner frame module rests on the ground, propped by a support locked in a support socket.

The straight frame module unfolded outwards the fence is equipped with load-bearing piles, on which a hinged span is suspended. The load-bearing piles are connected to the span with a support and a bar, both mounted on pivots permanently fixed to the load-bearing piles. The lower edge of the flexible material is tied around the bar, and then enclosed with a flexible band. The bar is fixed using dedicated ties to a special curb founded in the ground. The load-bearing piles of this module are equipped with bolts cooperating with sleeves mounted on the span.

The solution featured in the invention allows for eliminating the costs of logistics and the costs of storing classic flood barriers in dedicated, specially suited spaces. In the event of a flood, buildings and facilities are not secured by bags filled with sand, which has positive effect on the natural environment. The fact that transforming the fence into a flood barrier requires only bending the spans and applying a water-resistant, flexible material, easily sealed onto the ground allows for adapting the fence to the flood barrier function in the very first stage of a flood threat situation.

The joint system used with the bar allows for easy unfolding of the fence and transforming it into a flood barrier.

When executed according to the specifications of the invention, the fence performs its utilitarian function for the entire duration of its life span. In a flood threat situation, the fence can be easily transformed to perform the function of a flood barrier.

The load-bearing piles applied in the fence, opened ajar together with frame modules allow for unfolding the fence inwards in transforming it into a flood barrier. The result is rational use of land area, without the need to leave an outer strip of land for unfolding a fence, the segments of which unfold in the outward direction.

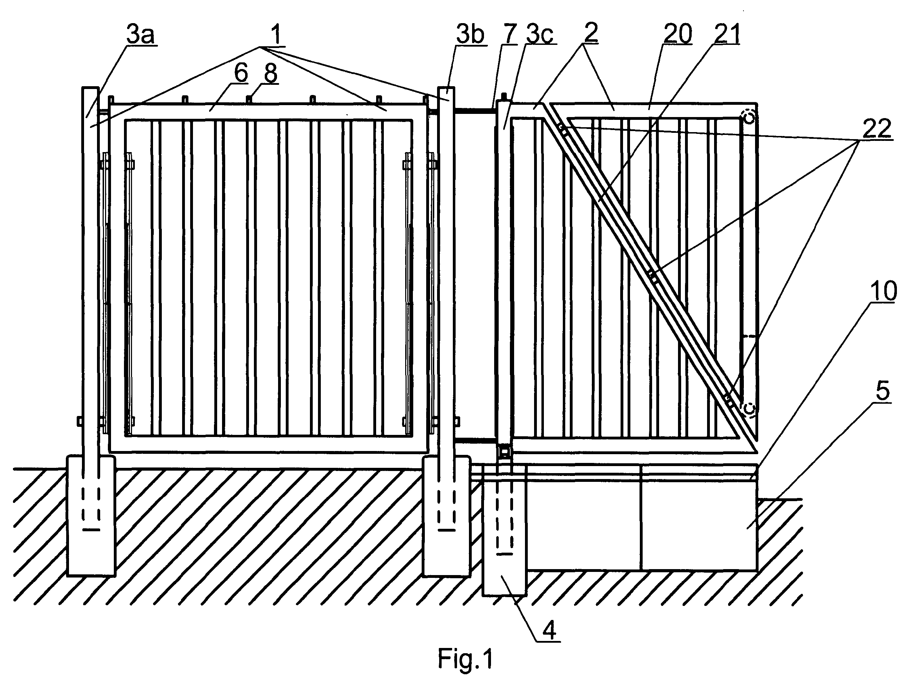

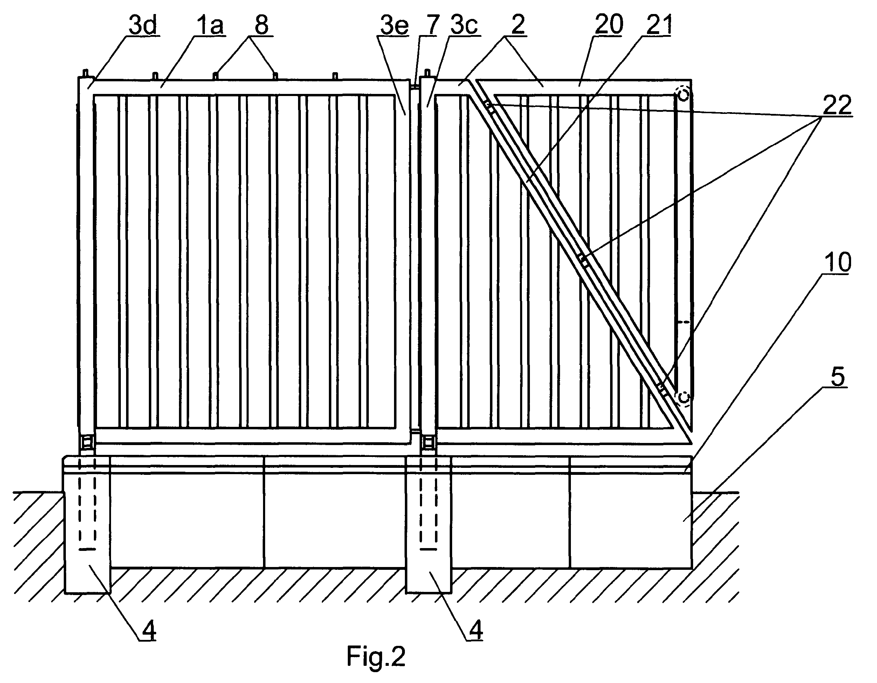

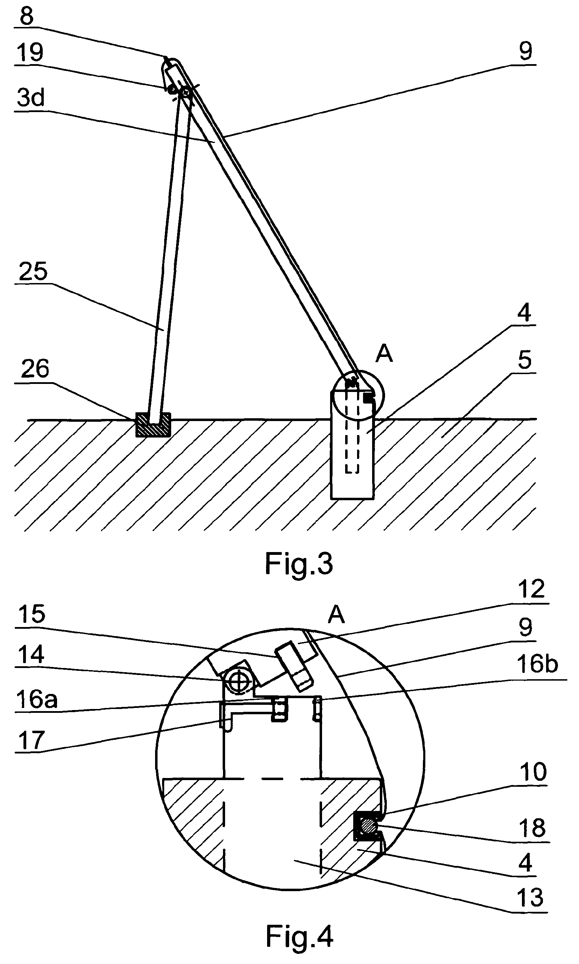

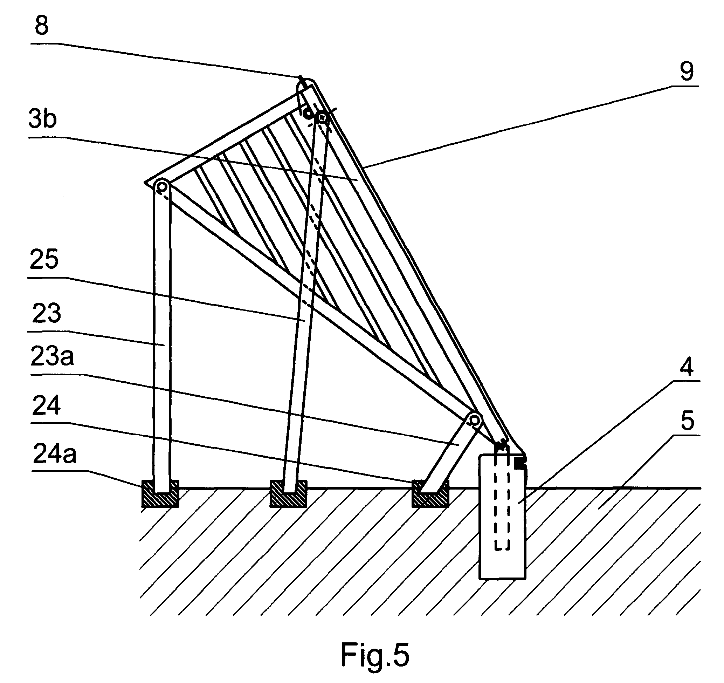

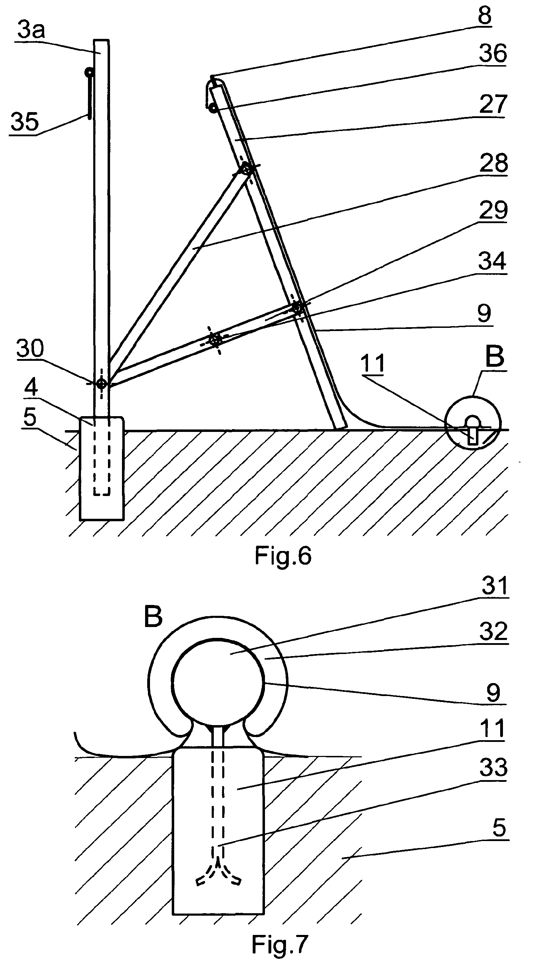

The subject of the invention is presented on an example in the figures, in which Fig. 1 presents a front view of the straight frame module unfolded outwards the fence and the corner frame module, Fig. 2 presents a front view of the straight frame module unfolded inwards the frame and the corner frame module, Fig. 3 presents a side view on the straight module unfolded inwards the fence to the flood barrier position, Fig. 4 presents a detail of the rotary connection of two load-bearing piles as well as a detail of the sealed connection of the spot where the barrier joins the ground, Fig. 5 presents a side view on the corner module after unfolding it to the flood barrier position, Fig. 6 presents a view on the straight module of the fence, unfolded outwards, after transforming it into a flood barrier, and Fig. 7 presents a detail of the seal of the barrier unfolded outwards, in the spot where the fence meets the ground.

This invention comprise a straight frame module 1, **1a** and a corner frame module **2**. The load-bearing elements comprise load-bearing piles **3a**, **3b**, **3c** mounted on a foundation **4** settled in the ground **5**. A span 6 is mounted between the load-bearing piles **3a**, **3b** of the straight frame module **1**, **1a** by means of a support **28** and a rod **29** The frame modules **1**, **1a** and **2** are interconnected with a bolt **7**, The fence subassembly further comprises pins **8** which are mounted atop the frame modules **1**, **1a** and **2** and support, in use, a flexible sealing material 9 tightly mounted onto a dedicated sealing fixture **10**, 11 founded in the ground **5**.

In another variant of the invention, the load-bearing piles **3a**, **3b** of the straight frame module **1** unfolded inwards the fence are permanently fixed to the span **6**, forming an integral part. The load-bearing piles **3c**, **3d** are divided in the upper **12** and lower part **13**, both mounted on rotary hinges on the pivot **14**. After folding to the vertical position, they are temporarily connected to one another with a bar **15** equipped with a hole located on the free end of the pile **12** mounted on the upper part. The bar is shut off in special sleeves **16a**, **16b**, mounted on the lower part **13** of the pile, with a staple **17** located in co-axis holes of the bar **15** and the sleeve **16a**, **16b**. The flexible material **9** applied here is fully waterproof, and thus may be mounted on the frame modules **1** and **2** from the flood side. All frame modules **1**, **1a** and **2** are equipped with sleeves **19** cooperating with corresponding bolts **7**. The lower part of the flexible material **9** is mounted in the base, at ground level **5**, using a flexible roller **18** locked in a special fixture **10**.

The corner **2** frame module is, in general, divided according to its diagonal, whereas its hinged span **20** is mounted on a fixed span **21** using suitable hinges **22**. After unfolding to the flood position, the hinged span **20** rests on supports **23**, **23a** locked in support sockets **24**, **24a**. After unfolding to the flood position, the corner **1a** frame module rests on the ground **5**, propped by a support **25** locked in a support socket **26**.

The straight frame module **1** unfolded outwards the fence is equipped with load-bearing piles **3a**, **3b**, on which a hinged span **27** is suspended. The load-bearing piles **3a**, **3b** are connected to the span **27** with a support **28** and a bar **29**, both mounted on pivots **30** permanently fixed to the load-bearing piles **3a**, **3b**. The lower edge of the flexible material **9** is tied around the bar **31** near the ground **5**, and then enclosed with a flexible band **32**. The bar **31** is fixed using dedicated ties **33** to a special curb **11** founded in the ground **5**. The load-bearing piles **3a**, **3b** of this module are equipped with bolts **35** cooperating with sleeves **36** mounted on the span **27**.

## Claims

1. Fence subassembly capable of being transformed into a flood barrier and comprising frame modules, load-bearing elements and spans, wherein the frame modules comprise a straight frame module (**1**, **1a**) and a corner frame module (**2**), the load-bearing elements comprise load-bearing piles (**3a**, **3b**, **3c**) mounted on a foundation (4) settled in the ground (**5**) and a span (**6**) is mounted between the load-bearing piles (**3a**, **3b**) of the straight frame module (**1**, **1a**) by means of a support (**28**) and a rod (**29**) and wherein the frame modules (**1**, **1a**) and (**2**) are interconnected with a bolt (**7**), said fence subassembly being **characterized in that** it further comprises pins (**8**) which are mounted atop the frame modules (**1**, **1a**) and (**2**) and support, in use, a flexible sealing material (**9**) tightly mounted onto a dedicated sealing fixture (**10**, **11**) founded in the ground (**5**).

2. The fence subassembly according to claim 1 **characterized in that** load-bearing piles (**3a**, **3b**) of the straight (**1**) frame module are permanently fixed to the span (**6**), forming an integral part, as the straight (**1a**) frame module, whereas the load-bearing piles (**3c**, **3d**) are divided in the upper (**12**) and lower (**13**) part, both mounted on rotary hinges on the pivot (**14**). After folding to the vertical position, they are temporarily connected to one another with a bar (**15**) equipped with a hole located on the free end of the pile (**12**) mounted on the upper part and shut off in special sleeves (**16a**, **16b**), mounted on the lower part (**13**) of the pile, with a staple (**17**) located in co-axis holes of the bar (**15**) and the sleeve (**16a**, **16b**).

3. The fence subassembly according to claim 1 **characterized in that** the flexible material (**9**) is water-resistant and mounted to frame modules (**1**) and (**2**) from the flood side.

4. The fence subassembly according to claim 1 **characterized in that** frame modules (**1**, **1a**) and (**2**) are equipped with sleeves (**19**) cooperating with corresponding bolts (**7**).

5. The fence subassembly according to claim 1 or 2 **characterized in that** the lower edge of the flexible material (**9**) is mounted near the ground (**5**) with a flexible roller (**18**) locked in a special fixture (**10**).

6. The fence subassembly according to claim **1** or **2 characterized in that** the corner frame module (**2**) is, in general, divided according to its diagonal, whereas its hinged span (**20**) is mounted in a fixed span (**21**) using suitable hinges (**22**), and after unfolding to the flood position, the hinged span (**20**) rests on supports (**23**, **23a**) locked in support sockets (**24**, **24a**). After unfolding to the flood position, the corner frame module (**1a**) rests on the ground (**5**), propped by a support (**25**) locked in a support socket (**26**).

7. The fence subassembly according to claim 1 **characterized in that** the frame module (**1**) is equipped with load-bearing piles (**3a**, **3b**), on which a hinged span (**27**) is suspended, whereas the load-bearing piles (**3a**, **3b**) are connected to the span (**27**) with a support (**28**) and a bar (**29**), both mounted on pivots (**30**) permanently fixed to the load-bearing piles (**3a**, **3b**), and the lower edge of the flexible material (**9**) is tied around the bar (**31**) near the ground (**5**), and then enclosed with a flexible band (**32**), whereas the bar (**31**) is fixed using dedicated ties (**33**) to a special curb (**11**) founded in the ground (**5**).

8. The fence subassembly according to claim 1 or 7 **characterized in that** the load-bearing piles (**3a**, **3b**) are equipped with bolts (**35**) cooperating with sleeves (**36**) mounted on the span (**27**).

## Patentansprüche

1. Zaun-Baugruppe, die in ein Sperrwerk umgewandelt werden kann und aus Rahmenmodulen, tragenden Elementen und Bögen besteht, wobei die Rahmenmodule aus einem geraden Rahmenmodul (1, 1a) und einem Winkel-Rahmenmodul (2) bestehen, die tragenden Elemente umfassen Tragpfahl (3a, 3b, 3c) montiert auf einem Fundament (4) in der Erde (5) und Bogen (6) montiert zwischen den tragenden Pfählen (3a, 3b) am geraden Rahmenmodul (1, 1a) mittels eines Trägers (28) und einer Stange (29), wobei die Rahmenmodule (1, 1a) und (2), mit einer Schraube (7) miteinander verbunden sind, wobei die Zaun-Baugruppe **dadurch gekennzeichnet, dass** sie ferner aus Stiften (8), montiert oben auf den Rahmenmodulen (1, 1a) und (2) und genutztem Träger, einem flexiblen Dichtungsmaterial (9), welches fest auf einer dedizierten Dichtungsvorrichtung (10, 11) montiert und in der Erde fundamentiert (5) sind, besteht.

2. Die Zaun-Baugruppe nach Anspruch 1, **dadurch gekennzeichnet, dass** die tragenden Pfähle (3a, 3b) am geraden (1) Rahmenmodul permanent am Bogen (6) montiert sind und einen festen Bestandteil bilden, als gerades (1a) Rahmenmodul, während die Tragpfähle (3c, 3d) in den oberen (12) und unteren (13) Teil unterteilt sind, beides angebracht an Drehscharnieren am Drehzapfen (14). Nach dem Zusammenfalten in die vertikale Position werden sie vorübergehend mit einer Stange mit der anderen verbunden (15), die mit einer Bohrung am freien Ende des Pfahls (12) versehen ist, montiert an dem Oberteil und geschlossen in Spezialhülsen (16a, 16b), montiert am Unterteil (13) des Pfahls, mit einer Klammer (17) lokalisiert in den koaxialen Löchern der Stange (15) und der Hülse (16a, 16b).

3. Zaun-Baugruppe nach Anspruch 1, **dadurch gekennzeichnet, dass** das flexible Material (9) wasserdicht und an Rahmenmodulen (1) und (2) von der Flutseite montiert ist.

4. Zaun-Baugruppe nach Anspruch 1, **dadurch gekennzeichnet, dass** die Rahmenmodule (1, 1a) und (2) mit Hülsen (19) versehen sind, die mit entsprechenden Bolzen (7) korrespondieren.

5. Zaun-Baugruppe nach Anspruch 1, **dadurch gekennzeichnet, dass** die untere Kante des flexiblen Materials (9) in der Nähe des Erdreichs (5) mit flexibler Walze (18) geschlossen in Spezialvorrichtung (10) montiert ist.

6. Zaun-Baugruppe nach Anspruch 1 oder 2, **dadurch gekennzeichnet, dass** das Winkel-Rahmenmodul (2) im Allgemeinen entsprechend seiner Diagonale geteilt ist, wobei sein klappbarer Bogen (20) in einem festen Bogen (21) montiert ist, und zwar mittels geeigneter Scharniere ( 22), und nach der Entfaltung in die Flutposition ruht der klappbare Bogen (20) auf den Trägern (23, 23a), verriegelt in Stützbuchsen (24, 24a). Nach der Entfaltung in die Flutposition ruht der Winkel-Rahmenmodul (1a) auf dem Boden (5), gestützt durch eine Stütze (25) geschlossen in Stützbüchse (26).

7. Zaun-Baugruppe nach Anspruch 1, **dadurch gekennzeichnet, dass** das Rahmenmodul (1) mit Tragpfählen (3a, 3b) ausgestattet ist, an denen ein klappbarer Bogen (27) aufgehängt ist, während die Tragpfähle (3a, 3b) mit dem Bogen (27) mit einem Träger (28) und einer Stange (29) verbunden sind, beides angebracht an Drehzapfen (30) fest angebracht an Tragpfählen (3a, 3b) und Unterkante des flexiblen Materials (9) gebunden um den Stab (31) in Bodennähe (5), und eingeschlossen mit einem flexiblen Band (32), wobei die Stange (31) mithilfe von dedizierten Bindern (33) zu einer speziellen Bordkante (11) im Boden (5) befestigt ist.

8. Zaun-Baugruppe nach Anspruch 1 oder 7, **dadurch gekennzeichnet, dass** die Tragpfähle (3a, 3b) mit Bolzen (35) versehen sind, die mit den Hülsen (36) montiert am Bogen (27) zusammenarbeiten.

## Revendications

1. Sous-ensemble de clôture capable de se transformer en une barrière contre les inondations et comprenant des modules de châssis, des éléments porteurs et des travées, dont les modules de châssis comprennent un module de châssis droit (**1**, **1a**) et un module de châssis de coin (**2**), les éléments porteurs comprennent des pieux porteurs (**3a**, **3b**, **3c**) montés sur une base (**4**) installée dans le sol (**5**) et une travée (**6**) est montée entre les pieux porteurs (**3a**, **3b**) du module de châssis droit (**1**, **1a**) au moyen d'un support (**28**) et une tige (**29**) et dont les modules de châssis droit (**1**, **1a**) et de coin (**2**) sont interconnectés par un boulon (**7**), ledit sous-ensemble de clôture étant **caractérisé en ce qu'**il comprend en outre des broches (**8**) qui sont montées au-dessus des modules de châssis (**1**, **1a**) et (**2**) et soutiennent, en cours d'utilisation, un matériau d'étanchéité souple (**9**) bien monté sur un banc d'étanchéité dédié (**10**, **11**) situé dans le sol (**5**).

2. Le sous-ensemble de clôture selon la revendication 1 **caractérisé en ce que** les pieux porteurs (**3a**, **3b**) du module de châssis droit (**1**) sont fixés de façon permanente à la travée (**6**), faisant sa partie intégrante, comme le module de châssis droit (**1a**), alors que les pieux porteurs (**3c**, **3d**) sont répartis dans la partie supérieure (**12**) et inférieure (**13**), tous deux montés sur charnières rotatives sur le pivot (**14**). Après pliage à la position verticale, ils sont reliés temporairement l'un à l'autre par une barre (**15**) munie d'un trou situé à l'extrémité libre du pieux (**12**) monté sur la partie supérieure et fermé dans des douilles spéciales (**16a**, **16b**), monté sur la partie inférieure (**13**) du pieux, avec une agrafe (**17**) se trouvant dans des trous de la barre (15) et la douille (**16a**, **16b**).

3. Le sous-ensemble de clôture selon la revendication 1 **caractérisé en ce que** le matériau flexible (**9**) est résistant à l'eau et monté sur les modules de châssis (**1**) et (**2**) sur le côté inondé.

4. Le sous-ensemble de clôture selon la revendication 1 **caractérisé en ce que** les modules de châssis (**1**, **1a**) et (**2**) sont équipés de douilles (**19**) coopérant avec des boulons correspondants (**7**).

5. Le sous-ensemble de clôture selon la revendication 1 ou 2 **caractérisé en ce que** le bord inférieur du matériau flexible (**9**) est monté à proximité du sol (**5**) avec un rouleau souple (**18**) enfermé dans un dispositif spécial (**10**).

6. Le sous-ensemble de clôture selon la revendication 1 ou 2 **caractérisé en ce que** le module de châssis de coin (**2**) est, en général, divisé selon sa diagonale, alors que sa travée articulée (**20**) est montée dans une travée fixe (**21**) au moyen de charnières appropriées (**22**), et après déploiement jusqu'à la position contre les inondations, la travée articulée (**20**) repose sur des supports (**23**, **23a**) enfermés dans des douilles de support (**24**, **24a**). Après déploiement jusqu'à la position contre les inondations, le module de châssis de coin (**1a**) repose sur le sol (**5**), soutenu par un support (**25**) enfermé dans une douille de support (**26**).

7. Le sous-ensemble de clôture selon la revendication 1 **caractérisé en ce que** le module de châssis (**1**) est équipé de pieux porteurs (**3a**, **3b**) sur lesquels une travée articulée (**27**) est suspendue, tandis que des pieux porteurs (**3a**, **3b**) sont reliés à la travée (**27**) par un support (**28**) et une barre (**29**), tous deux montés sur des pivots (**30**) fixés aux pieux porteurs (**3a**, **3b**), et le bord inférieur de l'élément flexible (**9**) est attaché à la barre (**31**) à proximité du sol (**5**), puis entouré d'une bande flexible (**32**), alors que la barre (**31**) est fixée à l'aide des liens dédiés (**33**) à une bordure spéciale (**11**) installé sur le sol (**5**).

8. Le sous-ensemble de clôture selon la revendication 1 ou 7 **caractérisé en ce que** les pieux porteurs (**3a**, **3b**) sont équipés de boulons (**35**) coopérant avec des douilles (**36**) montées sur la travée (**27**).
